Europäisches Patentamt

European Patent Office

Office européen des brevets

(11) Veröffentlichungsnummer : **0 416 265 B1**

# EUROPÄISCHE PATENTSCHRIFT

(45) Veröffentlichungstag der Patentschrift :
30.12.92 Patentblatt 92/53

(51) Int. Cl.⁵ : **F02D 41/38, F02D 41/26**

(21) Anmeldenummer : 90114347.9

(22) Anmeldetag : 26.07.90

(54) **Verfahren und Einrichtung zum Steuern der Kraftstoffeinspritzung.**

(30) Priorität : 07.09.89 DE 3929747

(43) Veröffentlichungstag der Anmeldung :
13.03.91 Patentblatt 91/11

(45) Bekanntmachung des Hinweises auf die
Patenterteilung :
30.12.92 Patentblatt 92/53

(84) Benannte Vertragsstaaten :
DE FR GB

(56) Entgegenhaltungen :
EP-A- 0 078 987
DE-A- 3 430 551
US-A- 3 982 519
US-A- 4 790 277
PATENT ABSTRACTS OF JAPAN vol. 9, no.
286 (M-429) 13 November 1985, & JP-A-60
125753
RESEARCH DISCLOSURE. no. 289, Mai 1988,
HAVANT GB Seite 292 ,Disclosure Nr28942:
"Fuel Injector With Programmed Calibration"
PATENT ABSTRACTS OF JAPAN vol. 12, no.
197 (M-706) 08 Juni 1988,& JP-A-63 005139
(NIPPON SOKEN INC.) 11 Januar 1988,
PATENT ABSTRACTS OF JAPAN vol. 9, no.
333 (M-443) 27 Dezember 1985,& JP-A-60
164661 (HITACHI LTD.) 27 August 1985,
PATENT ABSTRACTS OF JAPAN vol. 13, no.
225 (M-830) 25 Mai 1989,& JP-A-01 041643
(NIPPON DENSO CO.LTD.) 13 Februar 1989,
PATENT ABSTRACTS OF JAPAN vol. 10, no.
37 (M-453) 14 Februar 1986,& JP-A-60 190637

(73) Patentinhaber : ROBERT BOSCH GMBH
Postfach 30 02 20
W-7000 Stuttgart 30 (DE)

(72) Erfinder : Löffler, Alf, Dipl.-Phys.
Bergweg 6
W-7145 Markgröningen Talhausen (DE)

Erfinder : Wahl, Josef, Dipl.-Ing.
Schlossbergstrasse 4A
W-7000 Stuttgart 80 (DE)
Erfinder : Laufer, Helmut, Dipl.-Ing.
Otto Schoepfer Strasse 12
W-7016 Gerlingen (DE)
Erfinder : Engel, Gerhard, Dipl.-Ing.
Burghaldenweg 8 A
W-7000 Stuttgart 30 (DE)
Erfinder : Locher, Johannes, Ing.(grad.)
Moevenweg 50
W-7000 Stuttgart 50 (DE)
Erfinder : Grieshaber, Hermann, Dipl.-Ing. (FH)
Haldenstrasse 69
W-7447 Aichtal-Aich (DE)
Erfinder : Flaig, Ulrich, Dipl.-Ing.
Wolf Hirth Weg 4
W-7145 Markgröningen (DE)
Erfinder : Kull, Hermann, Dipl.-Ing.
Novalisstaffel 1
W-7000 Stuttgart 1 (DE)
Erfinder : Piwonka, Friedolin, Dr.-Ing.
Gutenbergstrasse 25
W-7145 Markgröningen (DE)
Erfinder : Eblen, Ewald, Dipl.-Ing.
Fridinger Strasse 53
W-7000 Stuttgart 75 (DE)
Erfinder : Polach, Wilhelm, Dr.-Ing.
Strombergstrasse 18
W-7141 Möglingen (DE)
Erfinder : Schmitt, Alfred, Dr.-Ing.
Ritterstrasse 31
W-7257 Ditzingen 4 (DE)
Erfinder : Tauscher, Joachim, Dipl.-Ing. (BA)
Libanonstrasse 12
W-7000 Stuttgart 1 (DE)
Erfinder : Birk, Manfred, Dipl.-Ing.
Gartenstrasse 1
W-7141 Oberriexingen (DE)
Erfinder : Karle, Anton, Dipl.-ing.
Neissestrasse 1
W-7730 VS-Villingen (DE)
Erfinder : Lauvin, Pierre
15e Allée du Beauviendent
F-69340 Francheville (FR)

## Beschreibung

### Stand der Technik

Die Erfindung betrifft ein Verfahren und eine Einrichtung zum Steuern der Kraftstoffeinspritzung gemäß den Oberbegriffen der Hauptansprüche. Ein solches Verfahren zum Steuern der Kraftstoffeinspritzung ist aus der DE-OS-37 20 544 bekannt. Dort wird ein Verfahren zum Steuern der Kraftstoffeinspritzung einer Hochdruckkraftstoffpumpe beschrieben. Mittels eines Magnetventils kann die in die Brennkraftmaschine einzuspritzende Kraftstoffmenge festgelegt werden. In der Förderphase eines Pumpenelements wird das Magnetventil selektiv geschlossen und geöffnet, so daß eine Voreinspritzung und anschließend eine Haupteinspritzung durchgeführt werden. Durch Fertigungstoleranzen und Alterungserscheinungen, treten Streuungen bei der in die einzelnen Zylinder der Brennkraftmaschine eingespritzten Kraftstoffmenge auf. Diese Streuungen bewirken, daß bei der Voreinspritzung bei gleichem Ansteuersignalder der Brennkraftmaschine unterschiedliche Mengen zugeführt werden. Da es sich bei den Voreinspritzmengen nur um sehr geringe Mengen handelt, kann der Fall eintreten, daß bei gleichem Ansteuersignal eine oder keine Voreinspritzung erfolgt. Dadurch gehen die Vorteile der Voreinspritzung verloren, d.h. es treten verstärkte Verbrennungsgeräusche auf.

Ferner ist aus der US-A 4 790 277 eine Einrichtung bekannt, bei der die Ansteuerdauer für die Haupteinspritzung ausgehend von in einem Speicher abgelegten Werten korrigiert wird, um Streuungen bei der Einspritzmenge zu kompensieren. Diese Korrekturwerte sind in Abhängigkeit von der Drehzahl und der einzuspritzenden Kraftstoffmenge in einem Kennfeld abgelegt.

Neue Pumpen werden an verschiedenen Testpunkten betrieben, die Ansteuer dauer für jede Pumpe wird individuell angepaßt bis die Kraftstofförderung jeder einzelnen Pumpe dem geforderten Testwert entspricht Korrekturwerte für jeden Testpunkt werden abgespeichert.

### Aufgabe der Erfindung

Der Erfindung liegt die Aufgabe zugrunde, bei einem Verfahren und einer Einrichtung zum Steuern der Kraftstoffeinspritzung der eingangs genannten Art bei der Voreinspritzung Streuungen in der eingespritzten Kraftstoffmenge zu eliminieren. Diese Aufgabe wird durch die in den Hauptansprüchen gekennzeichneten Merkmale gelöst.

### Vorteile der Erfindung

Das erfindungsgemäße Verfahren und Einrichtung besitzt demgegenüber den Vorteil, daß bei gleicher Dauer der Ansteuersignale für die Voreinspritzung die eingespritzte Kraftstoffmenge immer den gleichen Wert besitzt. Dies wird dadurch erreicht, daß in bestimmten Betriebszuständen die Dauer des Ansteuerimpulses für das Magnetventil ermittelt wird, bei dem gerade eine Voreinspritzung erfolgt.

Vorteilhafte und zweckmäßige Ausgestaltungen und Weiterbildungen der Erfindung sind in den Unteransprüchen gekennzeichnet.

### Zeichnungen

Die Erfindung wird nachstehend anhand der in den Zeichnungen dargestellten Ausführungsbeispielen erläutert. Figur 1 zeigt eine schematische Darstellung einer Einrichtung zur Durchführung des Verfahrens gemäß dem Anspruchs 1. In Figur 2 sind die Ansteuerimpulse für die Voreinspritzung TV und die Haupteinspritzung TH dargestellt. Figur 3 zeigt den Zusammenhang zwischen Dauer des Ansteuerimpulses T und der eingespritzten Kraftstoffmenge QK. Ein Flußdiagramm zur Erläuterung des Verfahrens ist in Figur 4 aufgeführt.

### Beschreibung des Ausführungsbeispiels

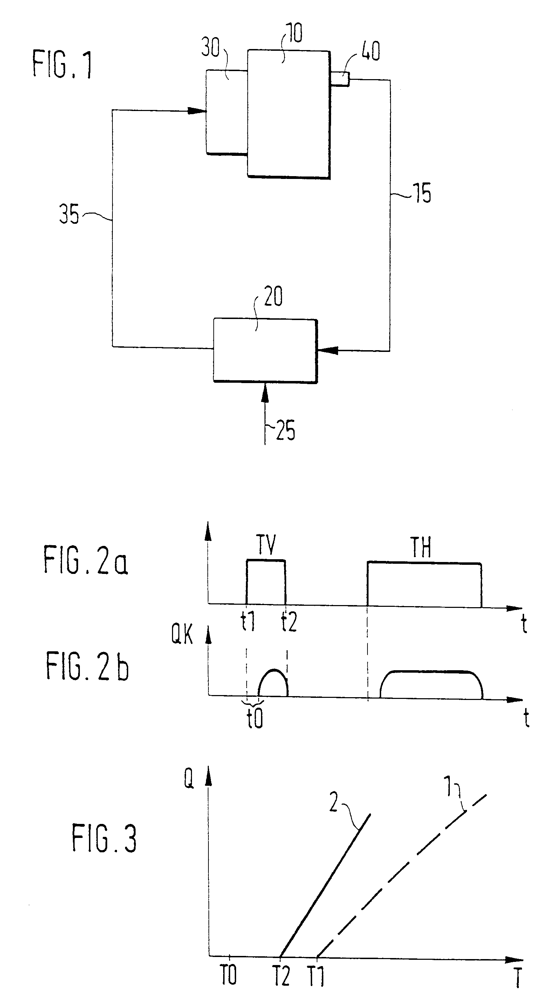

Figur 1 zeigt wesentliche Teile einer Einrichtung zur Kraftstoffeinspritzung in eine Brennkraftmaschine. Der Brennkraftmaschine 10 erhält von der Kraftstoffpumpe 30 eine bestimmte Kraftstoffmenge zugemessen. Verschiedene Sensoren 40 erfassen Meßwerte 15 die den Betriebszustand der Brennkraftmaschine charakterisieren und leiten diese zu einem Steuergerät 20. Das Steuergerät 20 berechnet ausgehend von den Meßwerten 15 und weiteren Größen 25 Ansteuerimpulse 35, mit denen die Kraftstoffpumpe 30 beaufschlagt wird. Bei der Brennkraftmaschine 10 handelt es sich um eine selbstzündende Brennkraftmaschine.

Das Steuergerät 20 berechnet in bekannter Weise die in die Brennkraftmaschine 10 einzuspritzende Kraftstoffmenge. Diese Berechnung erfolgt abhängig von verschiedenen Meßwerten 15 wie z.B. Drehzahl, Motortemperatur, tatsächlichen Einspritzbeginn und evtl. noch weiteren Größen 25, die den Betriebszustand der Brennkraftmaschine charakterisieren, dies sind z.B. die Stellung des Fahrpedals 25, der Umgebungsluftdruck. Das Steuergerät 20 setzt dann die gewünschte Kraftstoffmenge in Ansteuerimpulse 35 um. Mit diesen Ansteuerimpulsen wird dann das mengenbestimmende Glied der Kraftstoffpumpe 30 beaufschlagt. Als mengenbestimmendes Glied kann z.B. ein Magnetventil dienen, das so angeordnet ist, daß durch die Öffnungsdauer, bzw. die Schließdauer des Magnetventils die einzuspritzende Kraftstoffmenge festgelegt wird.

Das Magnetventil ist z.B. in der Hochdruckkraftstoffpumpe so angeordnet sein, daß während der Förderphase des Pumpenelements sich im Elementraum der Pumpe nach Schließen des Magnetventils Druck aufbaut, und bei Überschreiten eines bestimmten Druckwertes selbständig die Einspritzung erfolgt. Durch Öffnen des Magnetventils fällt der Druck im Elementraum ab und die Einspritzung wird beeendet. Durch kurzzeitiges Schließen und anschließendes Öffnen des Magnetventil in der Förderphase des Pumpenelements kann eine Voreinspritzung vor der eigentlichen Haupteinspritzung erzielt werden.

Dabei kann für jeden Zylinder eine separate Hochdruckkraftstoffpumpe mit einem die einzuspritzende Kraftstoffmenge bestimmenden Magnetventil vorhanden sein, oder eine Hochdruckkraftstoffpumpe mit einem Magnetventil beaufschlagt alle Zylinder nacheinander mit Kraftstoff.

Figur 2a zeigt eine mögliche Abfolge von Ansteuerimpulsen für eine Voreinspritzung TV und die nachfolgende Haupteinspritzung TH, Figur 2b die, aufgrund der in Figur 2a dargestellten Ansteuerimpulsen, eingespritzten Kraftstoffmenge QK über der Zeit t aufgetragen. Der Figur 2a und 2b ist zu entnehmen, daß zum Zeitpunkt t1 das Magnetventil schließt und nach einer kurzen Verzögerungszeit t0 Kraftstoff eingespritzt wird. Zum Zeitpunkt t2 öffnet das Magnetventil und damit endet die Kraftstoffzufuhr. Normalerweise ist der Ansteuerimpuls für die Voreinspritzung wesentlich kleiner als der Ansteuerimpuls für die Haupteinspritzung TH. Da Magnetventile bei gleichem Ansteuerimpuls unterschiedliche Schließzeiten besitzen können, kann es vorkommen, daß bei gleicher Zeitdauer des Ansteuerimpulses und sonst gleichen Betriebsparametern unterschiedliche Kraftstoffmengen eingespritzt werden. Da die Ansteuerimpulse für die Voreinspritzung üblicherweise sehr kurz sind, kann nun der Fall eintreten, daß bei einzelnen Magnetventilen keine Voreinspritzung erfolgt. Auf der anderen Seite kann aber auch der Fall eintreten, daß die Voreinspritzung so groß wird, daß sich die Abgaswerte der Brennkraftmaschine verschlechtern.

Figur 3 zeigt den Zusammenhang zwischen der Dauer des Ansteuerimpulses T und der eingespritzten Kraftstoffmenge Q für die Magnetventile 1 und 2. Das Magnetventil 1 mißt bei einem Ansteuerimpuls der Zeitdauer T1 Kraftstoff zu. Das Magnetventil 2 dagegen mißt schon bei einem Ansteuerimpuls der Dauer T2 Kraftstoff zu. Werden nun die Magnetventile mit einem Signal der Dauer T2 beaufschlagt, so erfolgt nur bei dem Magnetventil 2 eine Voreinspritzung, bei Magnetventil 1 dagegen nicht.

Ziel des im folgenden beschriebenen Verfahren ist es nun diese Streuungen auszugleichen. Dabei sind im wesentlichen zwei Ursachen für diese Streuungen gegeben, dies sind zum einen Toleranzen bei der Fertigung der Magnetventile, zum andern Alterungserscheinungen in der Einspritzeinrichtung. Von besonderer Bedeutung ist dieses Verfahren bei Pumpe-Düse-Systemen.

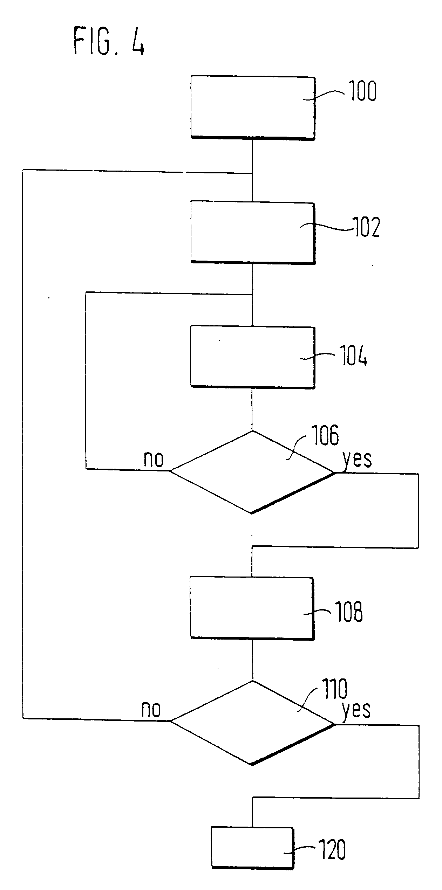

Mit Hilfe des Flußdiagrammes von Figur 4 soll nun ein Verfahren zum Ausgleich dieser Streuungen beschrieben werden. Dieses Verfahren ist dabei nicht nur auf magnetventilgesteuerte Kraftstoffpumpen beschränkt, es kann jederzeit auch auf andere elektrisch gesteuerte Stellwerke für Hochdruckkraftstoffpumpen übertragen werden. In einem ersten Schritt 100 wird überprüft ob sich die Brennkraftmaschine in einem Betriebszustand befindet in dem das Verfahren durchgeführt werden kann. Dies sind vorzugsweise stationäre Betriebspunkte. Es ist aber auch möglich durch ein Signal von einem externen Steuergerät das Verfahren zu initialisieren. Dies ist der Fall, wenn das Verfahren im Werk beim Motorenhersteller oder im Rahmen der Wartung durchgeführt und eventuel als Grundeinstellung beibehalten werden soll. Im Initialisierungsschritt 102 wird die Dauer des Ansteuerimpulses auf ein solch kleinen Wert T0 gesetzt, daß sicher keine Voreinspritzung erfolgt. Die Ansteuerimpulse für die Haupteinspritzung werden im folgenden auf einen konstanten Wert gehalten. In einem weiteren Schritt 104 erfolgt eine Erhöhung der Dauer des Ansteuerimpulses für die Voreinspritzung. Im Schritt 106 wird dann überprüft, ob ein Rückmeldesignal sich verändert hat. Anhand der Änderung des Rückmeldesignals kann erkannt werden, ob eine Voreinspritzung erfolgte oder nicht. Ändert sich das Rückmeldesignal nicht, so erfolgte keine Voreinspritzung. Ändert sich dagegen das Rückmeldesignal bei konstanter Haupteinspritzung so erfolgt eine Voreinspritzung. Die Rückmeldesignale werden ebenfalls wie die Betriebskenngrößen durch geeignete Sensoren 40 erfaßt. Als Rückmeldesignale können in besonders vorteilhafter Weise eines oder eine Kombination aus den Signalen verschiedener Sensoren verwendet werden. Als Sensoren kommen Sensoren die die Spritzdauer, den Elementdruck, den Brennraumdruck, den Motorkörperschall, den Luftschall, oder ein Lichtsignal im Brennraum erfassen in Frage. Evtl. müssen die Signale in Korrelation mit dem Ansteuersignal der Voreinspritzung betrachtet werden. Es ist dabei möglich, bei einer entsprechenden Anzahl von Sensoren, jedes Magnetventil separat zu betrachten. Ist kein Rückmeldesignal vorhanden, so erfolgt eine weitere Erhöhung der Dauer des Ansteuerimpulses, bis ein Rückmeldesignal vorhanden ist. Bei Vorhandensein eines Rückmeldesignals wird die Dauer des Ansteuerimpulses als Abgleichsignal dauerhaft abgespeichert 108. Die Abfrageeinheit 110 veranlaßt, daß die Prozedur für alle Zylinder durchgeführt wird. Im Schritt 120 erfolgt der Rücksprung in das an sich bekannte Hauptprogramm zur Steuerung der Brennkraftmaschine.

Es sind im wesentlichen die folgenden Strategien zur Durchführung des Verfahrens denkbar. Das Verfahren wird einmal im Werk beim Motorenhersteller oder im Rahmen der Wartung durchgeführt und als Grundeinstellung beibehalten. Driften über die Laufzeit werden gesteuert kompensiert, abhängig z.B. von der mit Drehzahl und Last gewichteten Laufzeit. Im Betrieb wird bei stationären Betriebspunkten dieses Verfahren durchgeführt. Die Abgleichsignale werden dann bei den folgenden Einspritzvorgängen zur adaptiven Verbesserung der Steuerung der Voreinspritzung verwendet.

Die mit Hilfe des Verfahrens ermittelten Werte können in besonders vorteilhafter Weise in einem Kennfeld über Last und Drehzahl gespeichert werden und stehen dann bei jeder Voreinspritzung zur Verfügung.

## Patentansprüche

1. Verfahren zum Steuern der Kraftstoffeinspritzung bei einer Hochdruckkraftstoffpumpe, bei dem wenigstens ein Magnetventil die in die Brennkraftmaschine einzuspritzende Kraftstoffmenge festlegt, wobei während der Förderphase eines Pumpenelementes das Magnetventil derart angesteuert wird, daß zuerst eine Voreinspritzung und dann eine Haupteinspritzung ausgeführt wird, dadurch gekennzeichnet, daß in bestimmten Betriebszuständen die Dauer (DZ) des Ansteuerimpulses für das Magnetventil ermittelt wird, bei dem gerade die Voreinspritzung einsetzt und davon ausgehend Abgleichsignale für Ansteuerimpulse, die die Voreinspritzung bewirken, gebildet und gespeichert werden, wobei die Dauer (DZ) des Ansteuerimpulse, ausgehend von einem Ansteuerimpuls bei dem keine Voreinspritzung erfolgt, so lange erhöht wird, bis anhand eines Rückmeldesignals erkannt wird, daß eine Voreinspritzung erfolgt.

2. Verfahren nach Anspruch 1, dadurch gekennzeichnet, daß die Abgleichsignale einmal am Ende der Motorfertigung oder in bestimmten Abständen ermittelt werden.

3. Verfahren nach Anspruch 1 oder 2, dadurch gekennzeichnet, daß die Abgleichsignale für die Voreinspritzung in stationären Betriebspunkten ermittelt werden.

4. Verfahren nach Anspruch 3, dadurch gekennzeichnet, daß als Rückmeldesignal wenigstens eine der Größen gemessene Spritzdauer, Elementdruck, Brennraumdruck, Körperschall, Luftschall, bzw. ein Lichtsignal im Brennraum verwendet wird.

5. Verfahren nach Anspruch 4, dadurch gekennzeichnet, daß das Rückmeldesignal in Korrelation mit dem Ansteuersignal der Voreinspritzung betrachtet wird.

6. Verfahren nach einem der vorhergehenden Ansprüche, dadurch gekennzeichnet, daß die Abgleichsignale als Funktion von Last und Drehzahl in einem Kennfeld gespeichert wird.

7. Verfahren nach wenigstens einem der vorhergehenden Ansprüche, dadurch gekennzeichnet, daß während der Ermittlung der Abgleichsignale die Ansteuerimpulse der Haupteinspritzung konstant gehalten werden.

8. Verfahren nach einem der vorhergehenden Ansprüche, dadurch gekennzeichnet, daß die Abgleichsignale für die Voreinspritzung, für jeden Zylinder ermittelt und abgespeichert werden.

9. Einrichtung zum Steuern der Kraftstoffeinspritzung bei einer Hochdruckkraftstoffpumpe, bei der Magnetventile die in die Brennkraftmaschine einzuspritzende Kraftstoffmenge festlegen, wobei während der Förderphase eines Pumpenelementes das Magnetventil derart angesteuert wird, daß zuerst eine Voreinspritzung und dann eine Haupteinspritzung ausgeführt wird, dadurch gekennzeichnet, daß Mittel vorgesehen sind, die in bestimmten Betriebszuständen die Dauer (DZ) des Ansteuerimpulses für das Magnetventil ermitteln, bei dem gerade die Voreinspritzung einsetzt und davon ausgehend Abgleichsignale für Ansteuerimpulse, die die Voreinspritzung bewirken, bilden und abspeichern, mit Mitteln, die die Dauer (DZ) des Ansteuerimpulses, ausgehend von einem Ansteuerimpuls bei dem keine Voreinspritzung erfolgt, so lange erhöhen, bis sie anhand eines Rückmeldesignals erkennen, daß eine Voreinspritzung erfolgt.

## Claims

1. Method of controlling fuel injection in the case of a high-pressure fuel pump, in which at least one solenoid valve fixes the quantity of fuel to be injected into the internal-combustion engine, the solenoid valve being activated during the delivery phase of a pump element in such a way that first of all a pre-injection and then a main injection is executed, characterised in that, in certain operating states, the duration (DZ) of the activation pulse for the solenoid valve at which the pre-injection is commencing at the time is determined and, on the basis of this, compensating signals for activation pulses which effect the pre-injection are formed and stored, the duration (DZ) of the activation pulses being increased, starting from an activation pulse in response to which no pre-injection takes place, until it is detected on the basis of a checkback signal that a pre-injection is taking place.

2. Method according to claim 1, characterised in that the compensating signals are determined once at the end of engine production or at certain intervals.

3. Method according to claim 1 or 2, characterised in that the compensating signals for the pre-injection are determined at steady-state operating points.

4. Method according to claim 3, characterised in that at least one of the variables measured duration of injection, element pressure, combustion chamber pressure, structure-borne noise, air-borne noise, or a light signal in the combustion chamber, is used as checkback signal.

5. Method according to claim 4, characterised in that the checkback signal is considered in correlation with the activation signal of the pre-injection.

6. Method according to one of the preceding claims, characterised in that the compensating signals are stored as a function of load and speed in a characteristics map.

7. Method according to at least one of the preceding claims, characterised in that the activation pulses of the main injection are kept constant during the determination of the compensating signals.

8. Method according to one of the preceding claims, characterised in that the compensating signals for the pre-injection are determined and stored for each cylinder.

9. Device for controlling fuel injection in the case of a high-pressure fuel pump, in which solenoid valves fix the quantity of fuel to be injected into the internal-combustion engine, the solenoid valve being actuated during the delivery phase of a pump element in such a way that first of all a pre-injection and then a main injection is executed, characterised in that means are provided which, in certain operating states, determine the duration (DZ) of the activation pulse for the solenoid valve at which pre-injection is commencing at the time and, on the basis of this, form and store compensating signals for activation pulses which effect the pre-injection, having means which increase the duration (DZ) of the activation pulse, starting from an activation pulse in response to which no pre-injection takes place, until they detect on the basis of a checkback signal that a pre-injection is taking place.

## Revendications

1. Procédé pour commander l'injection de carburant avec une pompe à carburant à haute pression, selon lequel au moins une soupape électromagnétique fixe la quantité de carburant à injecter dans le moteur à combustion interne, et pendant la phase de transfert d'un élément de pompe, la soupape électromagnétique est commandée pour exécuter tout d'abord une pré-injection, puis une injection principale, procédé caractérisé en ce que pour des états de fonctionnement déterminés, on détermine la durée (DZ) de l'impulsion de commande de l'électrovanne pour laquelle se produit seulement la pré-injection et partant de là on forme des signaux de compensation pour les impulsions de commande qui assurent la pré-injection et on enregistre ces signaux, et on augmente la durée (DZ) de l'impulsion de commande à partir d'une impulsion de commande pour laquelle il n'y a pas de pré-injection, jusqu'à ce que l'on décèle un signal de retour indiquant qu'il y a eu une pré-injection.

2. Procédé selon la revendication 1, caractérisé en ce que les signaux de compensation sont déterminés une seule fois à la fin de la fabrication du moteur ou à des intervalles déterminés.

3. Procédé selon la revendication 1 ou 2, caractérisé en ce qu'on détermine les signaux de compensation de la pré-injection à des points de fonctionnement stationnaires.

4. Procédé selon la revendication 3, caractérisé en ce que comme signal de retour on utilise au moins l'une des grandeurs mesurées, à savoir la durée de l'injection, la pression élémentaire, la pression dans la chambre de combustion, le son dans le matériau, le son dans l'air ou un signal lumineux dans la chambre de combustion.

5. Procédé selon la revendication 4, caractérisé en ce qu'on considère le signal de retour en corrélation avec le signal de commande de la pré-injection.

6. Procédé selon l'une des revendications précédentes, caractérisé en ce qu'on enregistre les signaux de compensation dans un champ de caractéristiques comme fonction de la charge et de la vitesse de rotation.

7. Procédé selon au moins l'une des revendications précédentes, caractérisé en ce que, pendant que l'on détermine les signaux de compensation, on maintient constantes les impulsions de commande pour l'injection principale.

8. Procédé selon l'une des revendications précédentes, caractérisé en ce qu'on détermine les signaux de compensation correspondant à la pré-injection pour chaque cylindre et on les enregistre.

9. Installation de commande de l'injection de carburant pour une pompe de carburant à haute pression, dans laquelle des électrovannes qui déterminent la quantité de carburant à injecter dans le moteur à combustion interne sont commandées pendant la phase de transfert par un élément de pompe pour produire tout d'abord une pré-injection puis une injection principale, installation caractérisée par des moyens qui déterminent à des intervalles de fonctionnement donnés, la durée (DZ) de l'impulsion de commande de l'électrovanne, pour laquelle se produit tout juste la pré-injection et partant de là, produisent des signaux de compensation pour les impulsions de commande qui assurant la pré-injection, ces signaux étant enregistrés, ainsi que des moyens qui augmentent la durée (DZ) de l'impulsion de commande à partir d'une impulsion de commande pour laquelle il n'y a pas encore de pré-injection, jusqu'à ce qu'un signal de retour indique qu'il y a une pré-injection.

FIG.1

FIG.2a

FIG.2b

FIG.3

FIG. 4